Europäisches Patentamt

European Patent Office

Office européen des brevets

(11) Veröffentlichungsnummer: **0 078 939**
**B1**

# (12) EUROPÄISCHE PATENTSCHRIFT

(45) Veröffentlichungstag der Patentschrift:
**27.08.86**

(21) Anmeldenummer: **82109571.8**

(22) Anmeldetag: **16.10.82**

(51) Int. Cl.⁴: **G 01 F 23/28**

(54) **Stabähnliche Vorrichtung zum Erfassen des jeweiligen Niveaus von Flüssigkeiten in Behältern, Kanälen o. dgl.**

(30) Priorität: **10.11.81 DE 3144541**

(43) Veröffentlichungstag der Anmeldung:
**18.05.83 Patentblatt 83/20**

(45) Bekanntmachung des Hinweises auf die Patenterteilung:
**27.08.86 Patentblatt 86/35**

(84) Benannte Vertragsstaaten:
**DE FR GB IT SE**

(56) Entgegenhaltungen:
**EP - A - 0 006 317**
**DE - A - 1 548 983**
**DE - A - 2 654 104**
**DE - A - 2 845 565**
**DE - B - 2 804 639**
**US - A - 3 448 616**

(73) Patentinhaber: **Henning, Wolfram, Neumarkter Strasse,
D-8501 Allersberg (DE)**

(72) Erfinder: **Henning, Wolfram, Neumarkter Strasse,
D-8501 Allersberg (DE)**

(74) Vertreter: **Patentanwälte Dipl.-Ing. Rudolf Bibrach
Dipl.-Ing. Elmar Rehberg, Pütterweg 6 Postfach 738,
D-3400 Göttingen (DE)**

## Beschreibung

Die Erfindung bezieht sich auf eine stabähnliche Vorrichtung zum Erfassen des Niveaus von Flüssigkeiten in Behältern, Kanälen o.dgl., mit einem im Behälter anzuordnenden Lichtleiter aus einem lichtdurchlässigen Material mit einem ersten Brechungsindex sowie mit einem Sender und einem Empfänger für durch den Lichtleiter zu schickendes Licht. Die Vorrichtung arbeitet mit elektromagnetischer Strahlung, also beispielsweise mit sichtbarem Licht, Infrarotstrahlung o.dgl.

Lichtleiter sind bekannt. Diese bestehen aus einem stab- oder kabelähnlichen Material, und zwar aus einem Kernmaterial und einem den Kern auf dem gesamten Umfang abdeckenden Mantelmaterial. Für Kern und Mantel können beispielsweise unterschiedliche Glas- und/oder Kunststoffsorten Verwendung finden. Wesentlich ist, dass das Kernmaterial und das Mantelmaterial unterschiedliche Brechungsindizes aufweisen, wobei der Brechungsindex des Mantelmaterials kleiner als derjenige des Kernmaterials sein muss. Dann wird das an den Stirnflächen durch beispielsweise einen Sender eintretende Licht durch Totalreflektion an den Grenzflächen zwischen Kern und Mantel im Lichtleiter weitergeleitet.

Es ist die Verwendung von derartigen stabähnlichen Lichtleitern zum Erfassen des jeweiligen Niveaus von Flüssigkeiten z.B. aus der DE-OS 1 548 983 bekannt. Dabei wird in der einfachsten Form ein einzelner derartiger Lichtleiter ohne Mantel an seinem einen Ende mit einem Sender und an seinem anderen Ende mit einem Empfänger ausgestattet. Der Lichtleiter wird mit einer nach unten weisenden Spitze gekrümmt geformt und eingebaut, so dass das Material des Lichtleiters bzw. Kern eine Spitze bildet. Mit einer solchen Einrichtung kann nur im Bereich dieser Spitze der Flüssigkeitsstand erfasst werden. Wird die gekrümmte Spitze von der Flüssigkeit benetzt, dann tritt das Licht schlagartig dort aus, so dass der Empfänger an der anderen Seite des Lichtleiters eine vergleichsweise niedrigere Lichtleistung empfängt. Es ist damit eine Ja-Nein-Erfassung möglich, denn die Spitze des Lichtleiters wird in genau gleicher Weise benetzt, gleichgültig, um wieviel das Niveau der Flüssigkeit oberhalb der Spitze steht. Eine solche Einrichtung hat den besonderen Nachteil, dass an der Spitze bei Absenkung des Flüssigkeitsspiegels oft ein Tropfen der Flüssigkeit hängenbleibt, so dass auch dadurch bereits oder teilweise ein Lichtaustritt an dieser Stelle verursacht wird, obwohl der Flüssigkeitsspiegel weiter abgesenkt ist. Hieraus resultieren Ungenauigkeiten und Fehlerfassungen.

Aus der US-PS 3 448 616 ist eine analog arbeitende Vorrichtung der eingangs beschriebenen Art bekannt, bei der Sender und Empfänger an einer Seite eines Lichtleiters angeordnet sind. Als Lichtleiter selbst wird ein konisch zugespitzter Glaskörper verwendet, der an seinem freien Ende so ausgebildet ist, dass dort Totalreflektion eintritt. Die konische Fläche dieses Glaskörpers bewirkt hinsichtlich der Lichtleitung eines von dem einen Ende her in den Konus hineingeschickten Lichtstrahles, der mehrfach an der Wandung totalreflektiert wird, dass sich mit jeder Totalreflektion der Einfallswinkel an der jeweiligen Reflektionsstelle verkleinert. Dagegen sind bei einem Lichtstrahl, der im Bereich der konischen Spitze reflektiert worden ist und sich in dem Glaskörper in Richtung auf die Verbreiterung hin zubewegt, die Verhältnisse umgekehrt, und zwar derart, dass dort bei jeder nachfolgenden Reflektion im Vergleich zur vorangehenden Reflektion eine Vergrösserung des Einfallswinkels stattfindet. Von dem Empfänger können bei dieser Anordnung nur solche Lichtstrahlen erfasst und zur Auswertung herangezogen werden, die hinsichtlich ihres Einfallswinkels so gerichtet sind, dass sie zumindest die Konusspitze erreichen und dort totalreflektiert werden. Lichtstrahlen, die bereits beim erstmaligen Hindurchlaufen durch den konischen Glaskörper vor Erreichen der konischen Spitze bereits den Grenzwinkel der Totalreflektion überschreiten, also einen kleineren Einfallswinkel als der Grenzwinkel einnehmen, treten an der betreffenden Stelle aus dem Glaskörper aus, und zwar gleichgültig, ob diese Stelle mit der zu messenden Flüssigkeit benetzt ist oder nicht. Dieser Teil des Lichtes ist für die Messung von vornherein nicht zu verwenden. Andererseits kann aber auch der Teil des Lichtes, der jeweils unter verhältnismässig grossen Einfallswinkeln totalreflektiert wird, nicht zu einer Messung benutzt werden, weil hinsichtlich dieser Winkel auch die Benetzung des Glaskörpers mit einer Flüssigkeit die Brechungsverhältnisse nicht so weit ändert, dass die Totalreflektion aufgehoben und Licht aus dem Lichtleiter herausgeführt wird. Mit dieser bekannten Vorrichtung kann zwar eine analoge Erfassung des Füllstandes erzielt werden, jedoch sind für die Auswertung nur solche Lichtstrahlen geeignet, die sich hinsichtlich ihrer Einfallswinkel zwischen den beiden beschriebenen Gruppen von Lichtstrahlen bewegen, die also den Grenzwinkel im Bereich der Spitze des Glaskörpers nicht unterschreiten, sondern sich an diesen annähern. Nur bei solchen Lichtstrahlen bewirkt dann die Flüssigkeit durch Benetzung des Glaskörpers die Aufhebung der Totalreflektion und das Herausführen des Lichtes aus dem Glaskörper in die Flüssigkeit. Dies bedeutet aber wiederum, dass die bekannte Vorrichtung im Bereich der Kegelspitze eine gute Messgenauigkeit aufweisen wird, während die Genauigkeit in Richtung auf das breite Ende des kegeligen Glaskörpers stark abnimmt, und zwar derart, dass der Glaskörper zu Messzwecken eigentlich nur in einem relativ kleinen Bereich im Anschluss an die Spitze benutzt werden kann. Soll dieser Bereich entsprechend den verschiedenen Füllstandshöhen ausgedehnt werden, dann ist es unumgänglich, den konischen Glaskörper in grösseren Dimensionen, insbesondere mit vergrössertem Durchmesser herzustellen und einzusetzen. Hier sind jedoch natürliche Grenzen gesetzt, insbes. dann, wenn die breite Seite des konischen Glaskörpers, beispielsweise einen grösseren Durchmesser annehmen müsste als es der entsprechenden Breite des Behälters an dieser Stelle entspricht. Die Anwendung dieser Einrichtung ist also auf geringe Füllstandshöhenunterschiede beschränkt. Es erscheint nicht möglich, damit Füllstandshöhenänderungen zu erfassen, wie sie beispielsweise in einem Kraftfahrzeugtank oder auch in einer Waschmaschine vorkommen.

Die DE-AS 2 804 639 zeigt in Fig. 2 eine Ausführungsform eines Füllstandsanzeigers für Flüssigkeiten oder Fluids in einem Behälter, deren Funktion glaubhaft ist. Dabei wird ein Stab mit lichtleitenden Eigenschaften eingesetzt, der auf seinem Umfang mit umlaufenden Kerben versehen ist, die in regelmässigen Abständen über die Länge des Stabes angeordnet sind. Die umlaufenden Kerben haben den Zweck, dort auftreffende Lichtstrahlen in der Luft, also ohne Benetzung durch die zu messende Flüssigkeit, durch Brechung und partielle Reflektion aus dem Stab nach aussen abzulenken, während diese Ablenkung im Bereich der Flüssigkeit nicht stattfindet, weil die Kerben von der Flüssigkeit ausgefüllt werden und dann dort andere Brechungsverhältnisse eintreten. Diese Vorrichtung arbeitet also genau gegensätzlich zum Anmeldungsgegenstand, hat aber den Vorteil, dass ein direktes Mass für die Füllstandshöhe gewonnen werden kann. Die Kerben müssen, um wirksam zu sein, mit hoher Herstellungsgenauigkeit poliert werden und der Stab muss auch eine gewisse Dicke aufweisen. Neben dieser aufwendigen Herstellung besitzt dieser Füllstandsanzeiger gerade bei niedrigen Füllstandshöhen eine geringe Empfindlichkeit, weil hier gerade ein besonders grosser Teil des Lichtes bereits ausgetreten ist. Es ist zwar eine quasi analoge Erfassung der Füllstandshöhe messbar, jedoch ergibt sich gerade dort die geringe Empfindlichkeit, z.B. bei einem fast leeren Benzintank eines Kraftfahrzeuges, wo es auf eine genaue und verlässliche Anzeige ankommt.

Die DE-A-2 654 104 zeigt eine Vorrichtung zum quasi-analogen Erfassen des jeweiligen Niveaus von Flüssigkeiten in einem Behälter, bei der eine Vielzahl von Messstellen über die Höhe des Behälters verteilt angeordnet sind. Jede einzelne Messstelle besteht aus zwei Bündeln von Lichtleitfasern, wobei das eine Bündel zur Heranleitung des Lichtes an die Messstelle und das andere Bündel zur Ableitung des Lichtes von der Messstelle auf einen jeweiligen Empfänger dient. Um die grosse Anzahl der Bündel aus optischen Fasern auf kleinem Raum unterzubringen, werden diese gekrümmt in einem zylindrischen Gehäuse untergebracht, wobei längs einer Mantellinie des Gehäuses die verschiedenen Messstellen gebildet sind. Im Bereiche jeder Messstelle verlaufen die Enden der Lichtleiter gerade. Die geraden Enden sind senkrecht zu ihrer Erstreckungsrichtung abgeschnitten und über ein Glasstück oder ein Kunststoffprisma miteinander verbunden. Dieses Glasstück oder Kunststoffprisma ist so gewählt und angeordnet, dass an ihm Licht reflektiert wird oder austritt, je nach der Benetzung der einzelnen Messstelle. Die Lage und die Winkel des Glasstücks, des Kunststoffprismas und der geraden Enden der Lichtleitfasern können verändert werden, um die Vorrichtung für verschiedene zu messende Fluide zu optimieren. Eine besondere Krümmung der Lichtleiter zur Beeinflussung der Totalreflektion wird nicht benutzt. Gerade in den Bereichen, in denen die Lichtleitfasern aus Platzgründen gekrümmt verlegt werden, sind keine Messstellen, so dass diese gekrümmte Verlegung so erfolgen muss, dass die Bedingungen der Totalreflektion eingehalten sind, gleichgültig ob hier eine Benetzung mit Flüssigkeit stattfindet oder nicht.

Der Erfindung liegt die Aufgabe zugrunde, eine Vorrichtung der eingangs beschriebenen Art, die also zur analogen oder quasi analogen Erfassung der Füllstandshöhe geeignet ist, derart weiterzubilden, dass sie auch bei grösseren Füllstandsänderungen einsetzbar ist und eine ausreichende Messgenauigkeit auch über grosse Messhöhen bzw. grössere Füllstandsänderungen erlaubt. Gleichzeitig soll die Vorrichtung besonders einfach aufgebaut und mit geringem Aufwand herstellbar sein.

Die erfindungsgemässe Vorrichtung ist im Patentanspruch 1 angegeben. Der Hauptvorteil dieser Vorrichtung besteht darin, dass der Lichtleiter nach seiner Herstellung nicht mehr bearbeitet, also insbesondere nicht mehr geschliffen werden muss, sondern dass es lediglich erforderlich ist, diesem Lichtleiter eine Gestalt zu geben, in der er besonders gekrümmte Bereiche aufweist. Die Krümmung dieser Bereiche ist dann so gewählt, dass es an jeder Krümmung eine gewisse Anzahl von solchen Lichtstrahlen gibt, deren Einfallswinkel sich im Bereich des Grenzwinkels der Totalreflektion bewegt, und zwar derart, dass, abgestimmt auf die zu messende Flüssigkeit, bei Benetzung der gekrümmten Bereiche mit Luft die Totalreflektion stattfindet, bei Benetzung mit der Flüssigkeit hingegen Licht aus dem Lichtleiter in die Flüssigkeit austritt. Auf diese Art und Weise findet damit eine Schwächung des durch den Lichtleiter fliessenden Lichtes statt. Die im Lichtleiter verbleibende Restlichtmenge ist ein umgekehrtes Mass für die Füllstandshöhe im Behälter. Während im allgemeinen ein Lichtleiter die Aufgabe hat, in den Lichtleiter eingebrachtes Licht möglichst verlustfrei innerhalb der Leiters zu leiten, geht es in der vorliegenden Erfindung darum, einem Lichtleiter eine ganz spezielle Formgebung mit besonders gekrümmten Bereichen zu geben, bei denen bei Benetzung des Lichtleiters mit der zu messenden Flüssigkeit gezielt Licht aus dem Lichtleiter in die Flüssigkeit abgeführt wird, während im Bereich des Lichtleiters, der sich oberhalb des Niveaus der Flüssigkeit befindet, nur der normale Lichtverlust im Lichtleiter auftritt. Ist der Behälter beispielsweise weitgehend leer, dann werden die Lichtaustrittsbedingungen nur an einem kleinen Teil der Länge des Lichtleiters erreicht, so dass die Reststrahlung einen relativ grossen Anteil der in den Lichtleiter über den Sender eingespeisten Strahlung darstellt. Diese umgekehrte Anzeige muss mit geeigneten Mitteln noch umgekehrt werden, um tatsächlich die Füllstandshöhe anzuzeigen oder abzubilden, was aber relativ leicht durchzuführen ist. Die erfindungsgemässe Vorrichtung kann analog oder auch quasi analog arbeitend ausgebildet werden und gestattet die Messung auch relativ grosser Füllstandsänderungen, wie sie beispielsweise am Kraftbehälter eines Kraftfahrzeuges oder auch an der Trommel einer Waschmaschine auftreten. Der Lichtleiter bzw. die Vorrichtung besitzt über die Länge gesehen etwa gleiche Breite, so dass ihre Unterbringung im Behälter keine Schwierigkeiten bereitet. Die Totalreflektionsbedingungen an dem Lichtleiter können kontinuierlich sein oder unstetig geändert werden. Auch eine diskontinuierliche Änderung und/oder eine stetige oder auch eine konstante Änderung sind möglich. Eine streng kontinuierliche Änderung führt zu einer analogen Erfassung. Eine diskontinuierliche Änderung führt zu einer quasi analogen Erfassung. Durch die Art und Weise der Änderung, beispielsweise durch eine unstetige Änderung, kann im Sinne einer Linearisierung der sich ergebenen Reststrahlung eingewirkt werden. Durch die spezielle Formgestaltung des Lichtleiters kann auch auf die Behälterform mit über die Höhe wechselndem Querschnitt, z.B. bei einem Kraftfahrzeug, Rücksicht genommen werden.

Die Vorteile der stabähnlichen Vorrichtung sind folgende:

Der Aufwand, der im Vergleich zu bisher bekannten, mit Lichtleitern arbeitende Vorrichtungen zum Erfassen des jeweiligen Flüssigkeitsniveaus arbeiten, wird erheblich gesenkt. Lichtleiter können bekanntlich preisgünstig hergestellt werden. Sie müssen zur Weiterverarbeitung in der vorliegenden Vorrichtung nicht mehr bearbeitet werden, insbesondere ist es nicht erforderlich, Teile des Lichtleiters partiell über den Umfang wegzuschleifen oder wegzulassen. Der Lichtleiter kann also so benutzt werden, wie er bei der üblichen Herstellung anfällt. Die Vorrichtung kann bei den verschiedensten Flüssigkeiten eingesetzt werden, wobei der Brechungsindex der zu messenden Flüssigkeit grösser oder kleiner als das Material des Kerns oder auch das Material des Mantels des Kerns des Lichtleiters sein kann. Die Genauigkeit der Messung ist über die Länge des Lichtleiters konstant bzw. kann durch die entsprechende Ausbildung konstant gewählt werden. Ebenso ist es möglich, besonders interessierende Bereiche mit erhöhter Messgenauigkeit auszustatten. Die Vorrichtung arbeitet spannungslos und besitzt keine bewegten Teile. Sie ist damit verschleissfrei und störungsarm, selbst gegen elektrische Felder. Es kann in einfacher Weise eine analoge oder zumindest eine quasi analoge Anzeige über die Länge erfasst werden. Es bedeutet keinen grossen Aufwand, die Erfassung zu linearisieren oder den Messwert bei vorgegebener Behälterform der Flüssigkeit anzupassen. Das Material des Lichtleiters, welches vorzugsweise Kunststoff oder Glas ist, kann an die verschiedenen Anwendungsfälle, insbesondere die jeweilige Flüssigkeit angepasst werden.

Die unrunden Bereiche an dem stabförmigen Trägerkörper können durch Vorsprünge, Bolzen o.dgl. oder durch Durchbrechungen am Trägerkörper gebildet sein, wobei der Lichtleiter zwischen den Vorsprüngen oder Durchbrechungen aufgewickelt am Trägerkörper gelagert ist, so dass am Lichtleiter jeweils auf ein im wesentlichen gerades Lichtleiterstück ein Stück mit besonderer Krümmung folgt usw. Nur die Bereiche mit der besonderen Krümmung, die je nach Anwendungsfall variiert werden kann, dienen der eigentlichen Messung, während die geraden Lichtleiterstücke nicht zu einem Lichtaustritt Veranlassung geben, sei es bei Benetzung mit Luft oder auch bei Benetzung mit Flüssigkeit.

Zweckmässig werden solche Lichtleiter eingesetzt, die neben dem Material der Kerns auch noch einen Mantel aufweisen, wobei der Brechungsindex des Materials des Kerns grösser als das Material des Mantels ist. Der Mantel übt damit im wesentlichen Schutzfunktion aus. Er versiegelt gleichsam die glatte Oberfläche des Kerns und schützt diese gegen das Ansetzen von Schmutzpartikeln oder das Auftreten von Rissen an der Oberfläche usw.

Der Lichtleiter kann auf dem Trägerkörper zwecks Erreichung von besonders gekrümmten Bereichen des Lichtleiters unter einer Spannung aufgewickelt sein. Diese Spannung muss nicht besonders hoch sein, sondern soll lediglich dazu dienen, dass die gekrümmten Lichtleiterstücke eine jeweils eindeutig definierte Krümmung durch Anlage an dem Vorsprung oder der Durchbrechung einnehmen. Die Spannung des Lichtleiters kann am Trägerkörper veränderbar sein. Hierbei ist es möglich, den Lichtleiter selbst mit einer Vorrichtung unter Zugspannung zu setzen, die nachstellbar ausgebildet sein kann, um auf diese Art und Weise ein Nachjustieren zu ermöglichen oder auch eine Nullpunktsabgleichung zu erzielen.

Der Lichtleiter kann zur Erhöhung der Messgenauigkeit als dünne, der formgebenden Gestalt des Trägerkörpers insbes. in den Bereichen der besonderen Krümmungen gut folgende Faser ausgebildet sein. Während beim Stand der Technik der konische Glaskörper beachtliche Dimensionen annehmen kann, erhöht sich beim Anmeldungsgegenstand die Messgenauigkeit dann, wenn eine besonders dünne Faser als Lichtleiter gewählt wird, deren Durchmesser also kleiner als 1 mm sein kann. Solche Fasern lassen sich eben auch gut biegen bzw. in Krümmungen verlegen, ohne dass dabei in der Oberfläche der Faser feine Risse auftreten, die insofern stören würden, als hierdurch nicht gewollte Lichtverluste auftreten würden.

Die Vorsprünge und/oder Durchbrechungen können mit unterschiedlichem gegenseitigem Abstand und/oder mit unterschiedlichen Abrundungen versehen sein. Sämtliche geometrischen Bedingungen können dabei variiert und an den jeweiligen Anwendungsfall angepasst werden. Insbesondere kann auch die gleiche Faser als Lichtleiter bei verschiedenen Vorrichtungen für verschiedene Anwendungszwecke eingesetzt werden.

Es ist sogar möglich, den Lichtleiter nach dem Aufwickeln auf dem Trägerkörper mit bleibender Gestalt zu formen und losgelöst vom Trägerkörper zum Einsatz zu bringen. Dies ist beispielsweise mit einem Lichtleiter aus einem Glasfaden möglich, der in warmem Zustand um einen Trägerkörper gewickelt wird, so dass er nach dem Erkalten diese Form bleibend einnimmt. Der Lichtleiter kann dann von dem Trägerkörper entfernt werden und zweckmässig in einer Schutzhülle o.dgl. zum Einsatz gelangen, während der Trägerkörper für das erneute Aufwickeln eines Lichtleiters in der Herstellung zur Verfügung steht.

In besonderer Ausführungsform kann der Lichtleiter um eine Reihe von Vorsprüngen, Bolzen o.dgl. an dem Trägerkörper abwärts und aufwärts herumgewickelt sein, wobei sich abwärts und aufwärts die gleichen Krümmungen für den Lichtleiter ergeben und ausserdem der Vorteil auftritt, dass sowohl der Sender als auch der Empfänger ausserhalb der zu messenden Flüssigkeit angeordnet werden können. Es kann zweckmässig sein, den Lichtleiter am unteren Umkehrpunkt, also auf halber Länge mit einer grösseren Krümmung als es den besonders gekrümmten Bereichen entspricht, umzulenken. Es ist aber auch möglich, dass der Lichtleiter nur um eine Reihe von Vorsprüngen, Bolzen o.dgl. an dem Trägerkörper in einer Richtung, also beispielsweise abwärts, herumgewickelt ist, und dass der Lichtleiter gestreckt zurücklaufend angeordnet ist. Es wird hier die Messstrecke von dem Licht nur einmal unter Schwächung durchlaufen, während in der gestreckten Form am Lichtleiter nur noch die natürlichen Lichtverluste, die aber für die Messung irrelevant sind, auftreten. Dabei können die Vorsprünge, Bolzen o.dgl. vertikal und/oder horizontal gegeneinander versetzt angeordnet sein, um auf die Gestalt der besonders gekrümmten Bereiche Einfluss zu nehmen.

Eine besonders einfache Realisierungsmöglichkeit der Erfindung besteht auch darin, einen Lichtleiter üblicher Ausbildung, also mit einem Kern und einem Mantel, auf einen Trägerkörper mit einem unrunden Querschnitt aufzuwickeln, so dass an den Stellen, an denen der Querschnitt des Trägerkörpers von der Kreisform abweicht, gekrümmte Bereiche entstehen, deren Geometrie selbstverständlich festgelegt sein muss. Es müssen hier nur die entsprechenden geometrischen Bedingungen eingehalten werden, wie sie sich in der Anpassung an den speziellen Anwendungsfall ergeben.

Die Erfindung wird anhand mehrerer Ausführungsbeispiele in der Zeichnung verdeutlicht und im folgenden weiter beschrieben. Es zeigen:

Fig. 1 eine Ansicht der Vorrichtung in einer ersten Ausführungsform,

Fig. 2 die vergrösserte Darstellung eines gekrümmten Bereiches des Lichtleiters bei Benetzung mit Luft,

Fig. 3 eine ähnliche Detaildarstellung wie Fig. 2, jedoch bei Benetzung mit Flüssigkeit,

Fig. 4 eine Vorrichtung mit weiteren Anordnungsmöglichkeiten,

Fig. 5 einen Querschnitt durch die Vorrichtung in einer weiteren Ausführungsform,

Fig. 6 die Verdeutlichung einer weiteren Möglichkeit,

Fig. 7 den Lichtleiter als wesentliches Element der Vorrichtung als warmverformten Glasstab,

Fig. 8 einen Horizontalschnitt durch eine weitere Ausführungsform der Vorrichtung und

Fig. 9 einen Horizontalschnitt durch eine letzte Ausführungsform der Vorrichtung.

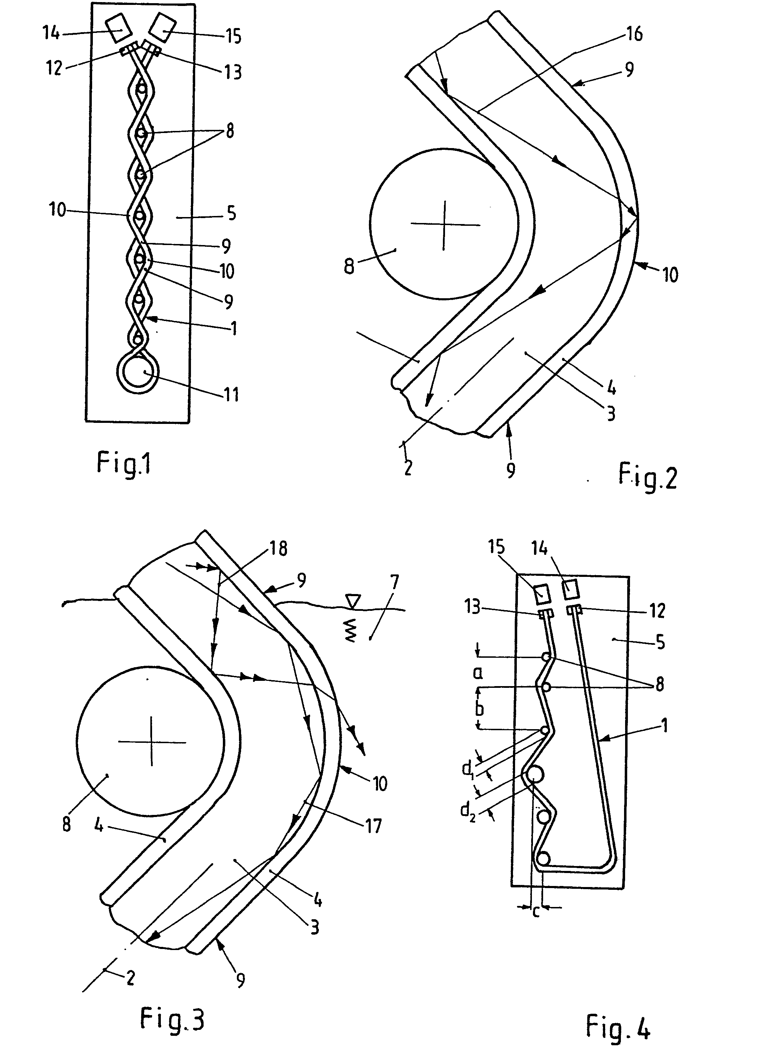

In Fig. 1 ist ein Lichtleiter 1 dargestellt, der runden Querschnitt aufweist, der sich konzentrisch um eine Mittelachse (Fig. 2) erstreckt und entweder nur aus einem Kern 3 aus einem lichtdurchlässigen Material, beispielsweise aus Glas, Quarz, Kunststoff o.dgl. besteht oder zusätzlich von einem Mantel 4 eingehüllt ist, der ebenfalls aus lichtdurchlässigem Material besteht. Die Materialien des Kerns 3 und des Mantels 4 weisen verschiedene Brechungsindizes auf. Der Brechungsindex $n_1$ des Kerns 3 ist grösser als der Brechungsindex $n_2$ des Mantels 4. Die Bedingungen der Totalreflektion von Lichtstrahlen oder allgemein elektromagnetischer Strahlung innerhalb des Lichtleiters 1 (Fig. 2)

$$n_1 \cdot \sin \alpha_1 = n_2 \cdot \sin \alpha_2$$

für Totalreflektions-Grenzwinkel wird

$$\alpha_2 = 90° \text{ gesetzt} \triangleq \sin \alpha_2 = 1$$

werden damit eingehalten. Mit $\alpha_1$ wird der Grenzwinkel der Totalreflektion bezeichnet. Der Brechungsindex $n_3$ der Luft ist $= 1$.

Dieser Brechungsindex der Luft ist damit kleiner als der Brechungsindex $n_1$ oder der Brechungsindex $n_2$ der Materialien des Lichtleiters. Der Brechungsindex $n_4$ einer Flüssigkeit 7 in einem Behälter o.dgl. ist in der Regel kleiner als der Brechungsindex $n_1$ des Kerns 3, kann aber durchaus auch einmal grösser sein.

Der Lichtleiter 1 ist auf einem Trägerkörper 5 um Vorsprünge, Bolzen o.dgl. 8 in der aus Fig. 1 ersichtlichen Weise herumgewickelt, und zwar von oben nach unten und von unten nach oben, so dass der Lichtleiter abwechselnd gerade Bereiche 9 und gekrümmte Bereiche 10 aufweist, wobei die Krümmung besonders gestaltet ist. Es versteht sich, dass das Licht in den geraden Bereichen immer die Totalreflektionsbedingungen vorfindet, während sich in den gekrümmten Bereichen diese Bedingungen ändern, und zwar in Abhängigkeit davon, ob der jeweilige gekrümmte Bereich 10 mit Luft 6 oder mit Flüssigkeit 7 benetzt wird. Die Vorsprünge, Bolzen o.dgl. 8 sind bei der Ausführungsform gemäss Fig. 1 in gleichem Abstand untereinander angeordnet, so dass an den jeweiligen Stellen der Lichtleiter 1 identisch gekrümmte Bereiche übereinander aufweist. Es versteht sich, dass die Anzahl, der Durchmesser und der jeweilige Abstand der Bolzen 8 variiert werden kann. Am unteren Ende ist ein Umlenkbolzen 11 vorgesehen, um den der Lichtleiter 1 mit einer vergleichsweise grösseren Krümmung herumgelegt ist. Die beiden freien Enden des Lichtleiters 1 können zweckmässig in Fixierstücken 12, 13 gehalten sein, und zwar so, dass der Lichtleiter 1 unter geringfügiger Spannung um die Reihe von Bolzen, Vorsprüngen o.dgl. 8 herumgewickelt ist, und zwar derart, dass der Lichtleiter 1 eindeutig an den Vorsprüngen 8 anliegt und damit die gekrümmten Bereiche 10 eine eindeutige Form aufweisen. Ein Sender 14 dient der Erzeugung und Aussendung von elektromagnetischer Strahlung, insbes. Licht in den Lichtleiter 1, während zum Auffangen der Reststrahlung ein Empfänger 15 vorgesehen ist. Der Empfänger 15 kann eine Fotodiode sein.

Anhand der Fig. 2 und 3 wird der Wirkmechanismus der Erfindung erläutert. Es ist hier ein einzelner gekrümmter Bereich 10 des Lichtleiters 1 herausgezeichnet, wie er sich im Bereich eines Vorsprunges, Bolzens o.dgl. 8 ergibt. An diesen gekrümmten Bereich schliessen sich notwendigerweise zwei gerade Bereiche 9 an. Es ist ein Lichtstrahl 16 dargestellt, wie er sich in dem Lichtleiter 1 ergibt. Die Schraffur des Lichtleiters ist aus Übersichtlichkeitsgründen weggelassen. Wie man sieht, findet dieser Lichtstrahl 16 zunächst in dem oberen geraden Bereich 9 die Bedingungen der Totalreflektion vor, und zwar an der Grenzschicht zwischen dem Kern 3 und dem Mantel 4. Im anschliessenden gekrümmten Bereich 10 jedoch kann dieser Lichtstrahl aus dem Kern 3 in den Mantel 4 austreten. An der Berührfläche zwischen Mantel 4 und umgebender Luft 6 sind jedoch wiederum die Bedingungen der Totalreflektion eingehalten, so dass dieser Lichtstrahl 16 wiederum in den Kern 3 eintritt und dort in dem sich anschliessenden geraden Bereich 9 auch innerhalb des Kerns 3 weitergeleitet wird. Es gibt selbstverständlich auch solche Lichtstrahlen, die den gekrümmten Bereich 10 nur innerhalb des Kerns 3 durchlaufen. Diese sind aber für die Messung an diesem speziellen gekrümmten Bereich 10 uninteressant, was nicht ausschliesst, dass sie im nächsten gekrümmten Bereich oder einem anderen gekrümmten Bereich 10 dann solche Bedingungen vorfinden, wie der Lichtstrahl 16 in Fig. 2. Ein solcher, im speziellen gekrümmten Bereich 10 nicht zur Auswertung herangezogener Lichtstrahl ist in Fig. 3 als Lichtstrahl 17 dargestellt. Zum Vergleich ist ein anderer Lichtstrahl 18 dargestellt, der die Überschreitung der Reflektionsbedingungen bei Benetzung mit der Flüssigkeit 7 im gekrümmten Bereich anzeigt. Dieser Lichtstrahl 18 wird also aus dem Lichtleiter 1 in die Flüssigkeit 7 herausgeführt und trägt damit zur Schwächung der Restmenge Licht bei, die am Empfänger 15 gemessen wird. Diese Vorgänge liegen in gleicher Weise an allen gekrümmten Bereichen 10 des Lichtleiters 1 vor, so dass sich eine konstant hohe Messgenauigkeit über die gesamte Länge bzw. Höhe des Lichtleiters 1 bzw. der Vorrichtung ergibt. Selbstverständlich muss die Krümmung in den Bereichen 10 jeweils an den Anwendungsfall angepasst werden.

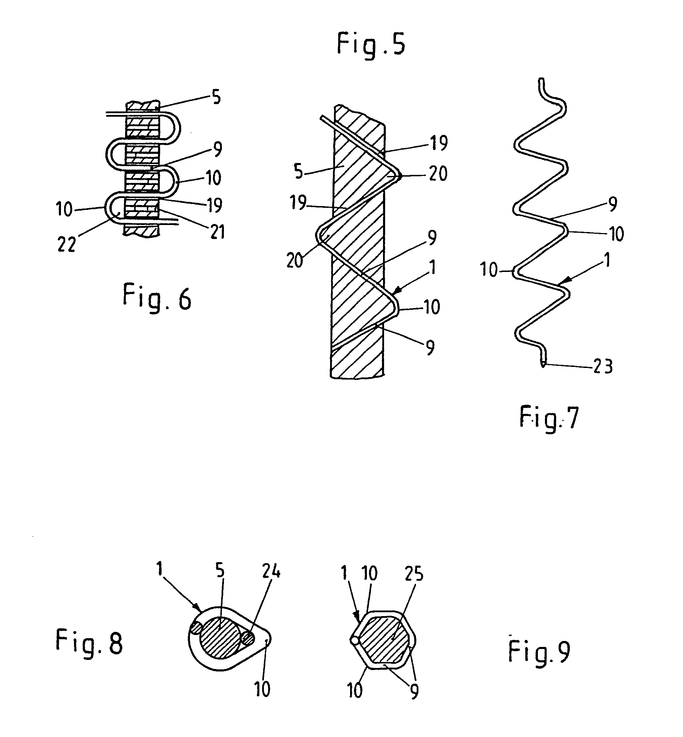

Fig. 4 zeigt eine weitere Anordnungsmöglichkeit des Lichtleiters auf einem Trägerkörper 5. Zur Verdeutlichung, dass die Vorsprünge, Bolzen o.dgl. 8 verschiedene Durchmesser d1, d2 aufweisen können und in vertikaler Richtung mit unterschiedlichen gegenseitigen Abständen a und b sowie horizontaler Richtung ebenfalls um verschiedene Beträge c versetzt angeordnet werden können, wird auf Fig. 4 hingewiesen. Es versteht sich, dass durch diese geometrischen Gestaltungsmöglichkeiten eine grosse Freiheit besteht, die Krümmung in den gekrümmten Bereichen 10 genau festzulegen und örtlich zu plazieren. Der Lichtleiter 1 ist gemäss Fig. 4 nach oben in einem geraden Stück hochgeführt, so dass hier kein spezieller Lichtverlust mehr auftritt. Der Lichtleiter 1 selbst besteht vorzugsweise aus einem Kern 3 und einem Mantel 4. Es ist aber auch möglich, nur ein einziges Material, also nur einen Kern 3 zu benutzen und die Luft gleichsam den Mantel bilden zu lassen. In vereinfachter Darstellung ist in den Fig. 5 bis 9 der Lichtleiter 1 jeweils nur durch eine Begrenzungslinie dargestellt, obwohl auch hier selbstverständlich ggf. ein Mantel 4 vorgesehen sein kann.

Fig. 5 zeigt einen Querschnitt durch den Trägerkörper 5. Dieser besitzt hier Durchbrechungen 19, die selbst formgebend gestaltet sein können oder auch, wie hier dargestellt, im Anschluss an rippenförmige Noppen 20 vorgesehen sind. Wesentlich ist immer nur, dass der Lichtleiter 1 in gerade Bereiche 9 und in gekrümmte Bereiche 10 aufgeteilt bzw. in eine solche Form gebracht wird.

Fig. 6 zeigt eine Ausbildungsmöglichkeit, bei welcher im Trägerkörper 5 Ausnehmungen 21 zum Einstecken von halbkreisförmigen Ansatzstücken 22 im Anschluss an Durchbrechungen 19 vorgesehen sind, so dass der Lichtleiter damit in der dargestellten Formgebung durch den Trägerkörper 5 gezogen werden kann. Selbstverständlich kann der Trägerkörper 5 auch aus einem Stück hergestellt werden.

Fig. 7 zeigt die Ansicht eines Lichtleiters aus einem warmumgeformten und damit bleibend verformten Glasstab, der losgelöst von einem Trägerkörper 5 angewendet werden kann, so dass der Trägerkörper 5 immer wieder zur Herstellung derartiger Lichtleiter eingesetzt werden kann. Sender 14 und Empfänger 15 sind auch hier zweckmässig am einen Ende des Lichtleiters 1 angeordnet, während das andere Ende ein Dachkantprisma 23 trägt, so dass dort die Bedingungen der Totalreflektion eingehalten sind. Es ist selbstverständlich auch möglich, den Sender 14 am einen Ende und einen Empfänger 15 am anderen Ende des Lichtleiters anzuordnen.

Die Fig. 8 und 9 zeigen Horizontalschnitt durch weitere Ausführungsformen der Vorrichtung. Gemäss Fig. 8 ist neben einem ersten Trägerkörper 5 mit kreisrundem Querschnitt ein weiterer Trägerkörper 24, ebenfalls mit kreisrundem Querschnitt, jedoch kleinerem Durchmesser angeordnet. Die beiden Trägerkörper 5, 24 können auch einstückig ausgebildet sein. Der Lichtleiter 1, der auch hier wiederum entweder nur aus einem Material als Kern 3 oder durch Zusammenfügung zweier Materialien als Kern 3 und Mantel 4 ausgebildet sein kann, ist einfach um die beiden Trägerkörper 5, 24 herumgewickelt, so dass hier die für die Messung wesentlichen gekrümmten Bereiche 10 aussen am Trägerkörper 24 entstehen. In diesen besonders gekrümmten Bereichen 10, in denen sich der Lichtleiter 1 um den Trägerkörper 24 schlingt, wird eine Situation geschaffen, bei der bei Benetzung mit Flüssigkeit 7 Licht austreten kann, bei Zutritt von Luft 6 hingegen noch nicht.

Die Ausbildungsform gemäss Fig. 9 zeigt einen Trägerkörper 25 aus einem Sechskantmaterial mit vergleichsweise gerundeten Ecken. Um diesen ist ein Lichtleiter 1 mit Kern 3 und Mantel 4 herumgewickelt, so dass auch hier an den Kanten des Trägerkörpers 25 die entsprechenden Bedingungen in dem Lichtleiter 1 geschaffen werden, so dass bei Benetzung mit entsprechender Flüssigkeit 7 Licht austreten kann. Es versteht sich, dass durch die Wahl der verschiedenen Glas- und Kunststoffsorten eine Abstimmung auf den Brechungsindex der zu messenden Flüssigkeit erfolgen muss.

Bezugszeichenliste:
1 = Lichtleiter
2 = Mittelachse
3 = Kern
4 = Mantel
5 = Trägerkörper
6 = Luft
7 = Flüssigkeit
8 = Vorsprünge, Bolzen o.dgl.
9 = gerade Bereiche
10 = gekrümmte Bereiche
11 = Umlenkbolzen
12 = Fixierstück
13 = Fixierstück
14 = Sender
15 = Empfänger
16 = Lichtstrahl
17 = Lichtstrahl
18 = Lichtstrahl
19 = Durchbrechungen
20 = Noppen
21 = Ausnehmungen
22 = Ansatzstück
23 = Dachkantprisma
24 = Trägerkörper
25 = Trägerkörper

## Patentansprüche

1. Stabähnliche Vorrichtung zum Erfassen des jeweiligen Niveaus von Flüssigkeiten in Behältern, Kanälen o.dgl., mit einem in einen Behälter anzuordnenden Lichtleiter aus einem Kern, aus einem lichtdurchlässigen Material mit einem ersten Brechungsindex, sowie mit einem Sender und einem Empfänger für durch den Lichtleiter zu schickendes Licht, wobei der Lichtleiter mindestens einen Bereich aufweist, der bei Zutritt von Luft die Bedingungen der Totalreflektion einhält, bei Benetzung mit der Flüssigkeit dagegen die Bedingungen der Totalreflektion unterschreitet, so dass Licht in die Flüssigkeit austritt, dadurch gekennzeichnet, dass der ggf. einen Mantel (4) aufweisende Lichtleiter (1) auf einen stabförmigen Trägerkörper (5; 5, 24; 25) mit unrundem Querschnitt aufgewickelt ist, und dass die unrunden Bereiche des Trägerkörpers eine solche Gestalt besitzen, dass der Lichtleiter (1) durch das Aufwickeln eine Mehrzahl von besonders gekrümmten Bereichen (10) erhält, an denen bei Zutritt von Luft (6) die Bedingungen der Totalreflektion eingehalten, bei Benetzung mit der Flüssigkeit (7) dagegen die Bedingungen der Totalreflektion unterschritten werden.

2. Vorrichtung nach Anspruch 1, dadurch gekennzeichnet, dass die unrunden Bereiche an dem stabförmigen Trägerkörper (5) durch Vorsprünge, Bolzen o.dgl. (8) oder durch Durchbrechungen (19) am Trägerkörper (5) gebildet sind, und dass der Lichtleiter (1) zwischen den Vorsprüngen (8) oder Durchbrechungen (19) aufgewickelt am Trägerkörper (6) gelagert ist, so dass am Lichtleiter (1) jeweils auf ein im wesentlichen gerades Lichtleiterstück (9) ein Stück mit besonderer Krümmung (10) folgt usw.

3. Vorrichtung nach Anspruch 1 oder 2, dadurch gekennzeichnet, dass der Lichtleiter (1) auf dem Trägerkörper (5; 5, 24; 25) zwecks Erreichung von besonders gekrümmten Bereichen (10) des Lichtleiters (1) unter einer Spannung aufgewickelt ist.

4. Vorrichtung nach Anspruch 3, dadurch gekennzeichnet, dass die Spannung des Lichtleiters (1) am Trägerkörper veränderbar ist.

5. Vorrichtung nach Anspruch 1 bis 4, dadurch gekennzeichnet, dass der Lichtleiter (1) zur Erhöhung der Messgenauigkeit als dünne, der formgebenden Gestalt des Trägerkörpers (5; 5, 24; 25) insbesondere in den Bereichen der besonderen Krümmungen gut folgende Faser ausgebildet ist.

6. Vorrichtung nach Anspruch 2, dadurch gekennzeichnet, dass die Vorsprünge (8) und/oder Durchbrechungen (19) mit unterschiedlichem gegenseitigen Abstand und/oder mit unterschiedlichen Abrundungen versehen sind.

7. Vorrichtung nach Anspruch 1, dadurch gekennzeichnet, dass der Lichtleiter (1) nach dem Aufwickeln auf den Trägerkörper mit bleibender Gestalt geformt ist und losgelöst vom Trägerkörper zum Einsatz kommt.

8. Vorrichtung nach Anspruch 1 oder 2, dadurch gekennzeichnet, dass der Lichtleiter (1) um eine Reihe von Vorsprüngen, Bolzen o.dgl. (8) an dem Trägerkörper (5) abwärts und aufwärts herumgewickelt ist.

9. Vorrichtung nach Anspruch 1 oder 2, dadurch gekennzeichnet, dass der Lichtleiter (1) um eine Reihe von Vorsprüngen, Bolzen o.dgl. (8) an dem Trägerkörper (5) in einer Richtung herumgewickelt ist und der Lichtleiter gestreckt zurücklaufend angeordnet ist.

10. Vorrichtung nach Anspruch 8 oder 9, dadurch gekennzeichnet, dass die Vorsprünge, Bolzen o.dgl. (8) vertikal und/oder horizontal gegeneinander versetzt angeordnet sind.

**Claims**

1. Rod-like device for detecting the prevailing level of liquids in containers, channels or the like, having a light guide, which is to be disposed in a container and which consists of a core, of a transparent material with a first refractive index, and also having an emitter and a receiver for light to be passed through the light guide, the light guide exhibiting at least one region which, in the event of the entry of air, fulfils the conditions for total reflection, but in the event of being wetted with the liquid falls below the conditions for total reflection, so that light passes out into the liquid, characterized in that the light guide (1), which possibly exhibits an envelope (4), is wound on a rod-like carrier body (5; 5, 24; 25) with a non-circular cross-section, and in that the non-circular regions of the carrier body have such a design that as a result of such winding the light guide (1) receives a multiplicity of specifically curved regions (10), at which, in the event of the entry of air (6), the conditions for total reflection are fulfilled, but in the event of being wetted with the liquid (7) the conditions fall below those for total reflection.

2. Device according to Claim 1, characterized in that the non-circular regions at the rod-like carrier body (5) are formed by projections, pins or the like (8) or by perforations (19) at the carrier body (5), and in that the light guide (1) is positioned wound at the carrier body (5) between the projections (8) or perforations (19), so that at the light guide (1) a portion with specific curvature (10) in each instance follows a substantially linear light guide portion (9) etc.

3. Device according to Claim 1 or 2, characterized in that the light guide (1) is wound on the carrier body (5; 5, 24; 25) under tension for the purpose of achieving specifically curved regions (10) of the light guide (1).

4. Device according to Claim 3, characterized in that the tension of the light guide (1) at the carrier body is variable.

5. Device according to Claims 1 to 4, characterized in that, in order to increase the accuracy of measurement, the light guide (1) is constructed as a thin fibre which closely follows the shaping design of the carrier body (5; 5, 24; 25), in particular in the regions of the specific curvatures.

6. Device according to Claim 2, characterized in that the projections (8) and/or perforations (19) are provided with differing mutual spacings and/or with differing rounded portions.

7. Device according to Claim 1, characterized in that, after winding on the carrier body, the light guide (1) is formed in a design of lasting duration and is used when released from the carrier body.

8. Device according to Claim 1 or 2, characterized in that the light guide (1) is wound around a series of projections, pins or the like (8) at the carrier body (5) downwards and upwards.

9. Device according to Claim 1 or 2, characterized in that the light guide (1) is wound in one direction around a series of projections, pins or the like (8) at the carrier body (5), and the light guide is disposed so as to be reversed in a stretched configuration.

10. Device according to Claim 8 or 9, characterized in that the projections, pins or the like (8) are disposed so as to be mutually offset vertically and/or horizontally.

**Revendications**

1. Dispositif en forme de bâton pour détecter le niveau respectif de liquides dans des récipients, des canaux ou similaires, avec un conducteur à fibres optiques destiné à être placé dans un récipient et se composant d'un noyau en un matériau perméable à la lumière, avec un premier indice de réfraction, ainsi que d'un émetteur et d'un récepteur pour la lumière à envoyer à travers le conducteur à fibres optiques, ce conducteur comportant au moins une zone qui, en cas d'arrivée d'air, satisfait aux conditions de la réflexion totale, cependant qu'en cas d'imprégnation avec le liquide, elle passe au-dessous des conditions de la réflexion totale, de sorte que de la lumière sort dans le liquide, caractérisé en ce que le conducteur (1) à fibres optiques, qui présente le cas échéant une gaine (4), est enroulé sur un corps porteur (5; 5, 24; 25) en forme de bâton de section transversale non ronde et que les zones non rondes du corps porteur ont une forme telle que l'enroulement donne au conducteur (1) à fibres optiques un certain nombre de zones (10) particulièrement courbées, sur lesquelles, en cas d'arrivée d'air (6), les conditions de la réflexion totale sont satisfaites, cependant qu'en cas d'imprégnation avec le liquide (7), les conditions de la réflexion totale ne sont pas atteintes.

2. Dispositif suivant la revendication 1, caractérisé en ce que les zones non rondes du corps porteur (5) en forme de bâton sont formées par des saillies, doigts ou similaires (8) ou par des perforations (19) sur le corps porteur (5) et que le conducteur à fibres optiques (1) est logé sur le corps porteur (5) par enroulement entre les saillies (8) ou perforations (19), de sorte que, sur le conducteur à fibres optiques (1), un tronçon essentiellement droit (9) de ce conducteur est suivi chaque fois par un tronçon à courbure particulière (10).

3. Dispositif suivant la revendication 1 ou 2, caractérisé en ce que le conducteur (1) à fibres optiques est enroulé sous tension sur le corps porteur (5; 5, 24; 25), pour qu'on obtienne les zones (10) particulièrement courbées de ce conducteur.

4. Dispositif suivant la revendication 3, caractérisé en ce que la tension du conducteur à fibres optiques (1) qui est sur le corps porteur est variable.

5. Dispositif suivant les revendications 1 à 4, caractérisé en ce que, pour que la précision de mesure soit augmentée, le conducteur à fibres optiques (1) est constitué par une fibre mince, qui suit bien la forme déterminante du corps porteur (5; 5, 24; 25), spécialement dans les zones à courbure particulière.

6. Dispositif suivant la revendication 2, caractérisé en ce que les saillies (8) et/ou perforations (19) ont des espacements réciproques différents et/ou sont munies d'arrondis différents.

7. Dispositif suivant la revendication 1, caractérisé en ce que le conducteur à fibres optiques (1) conserve, après l'enroulement sur le corps porteur, la forme correspondante et qu'il est utilisé séparé de ce corps.

8. Dispositif suivant la revendication 1 ou 2, caractérisé en ce que le conducteur à fibres optiques (1) est enroulé autour d'une rangée de saillies, doigts ou similaires (8), sur le corps porteur (5), en amont et en aval.

9. Dispositif suivant la revendication 1 ou 2, caractérisé en ce que dans un sens le conducteur à fibres optiques (1) est coudé autour d'une rangée de saillies, doigts ou similaires (8), sur le corps porteur (5), et qu'au retour il est disposé de façon rectiligne.

10. Dispositif suivant la revendication 8 ou 9, caractérisé en ce que les saillies, doigts ou similaires (8) sont décalés entre eux verticalement et/ou horizontalement.

Fig.1

Fig.2

Fig.3

Fig.4

Fig.5

Fig. 6

Fig.7

Fig. 8

Fig.9